# EUROPEAN PATENT APPLICATION

(11) **EP 1 750 191 A2**
(43) Date of publication of application: **07.02.2007**
(21) Application number: 06076263.0
(22) Date of filing: 19.06.2006
(51) Int. Cl.: G05D 11/13

(54) **Liquid chemical products mixing device for self-propelled machine or stand alone usage**

(30) Priority: 20.06.2005 IT MI20051150
(71) Applicant: Advantech Int'l S.r.l., 20059 Vimercate (IT)
(72) Inventor: Formenti, Roberto, 20059 Vimercate (IT)
(74) Representative: Riccardi, Sergio

(57) **Abstract**

A liquid chemical products mixing device (15) is described, possibly even apt to be installed on a generic self-propelled machine (1), for washing floors and surfaces of various kind and , in this case, possibly connected to tank (7) for liquid or deterging mixing of the machine (1), including at least one water inlet filler (17) for said machine (15) and at least one inlet filler for chemicals (19) to be mixed with said water, at least one micro processor control unit (23) able to manage the amount of said mixture to be supplied by means of real time measuring of the amount of water and of chemicals drawn from the respective inlet fillers (17 and 19), and at least a motor pump (21), managed by said control unit (23), able to draw said inlet water and chemicals in said device (15) and to supply the resulting mixture. Such device performs a completely automatic and continuous mixing of a solution with a predetermined strength , said strength can be regulated according to needs by means of a suitable control panel.

## Description

The present invention relates to a liquid chemical products mixing device that can if necessary be installed on a self-propelled machine, particularly on a wash-and-dry machine for various surfaces.

There are various kind of wash or wash-and-dry self-propelled machines of substantially flat extensive surfaces, as for example roads, parking lots, railway stations or industrial buildings floors, airports and so on. Many of these machines use rotating brushes and/or nozzles in order to deliver on the surface to be cleaned a controlled amount of deterging chemical product, usually diluted with water in a diversity of percentages according to kind of employ and surfaces to be cleaned.

In general, a problem arises whenever a concentrated or highly concentrated liquid is used for deterging, cleaning, sanitary purposes, lubrication and so on.

It is nowadays common practice to perform manual and empirical mixing in water of a chemical product or more chemical products. This mixing is often performed by personnel, lacking time or experience, that produce a mixing not always apt for a particular use on a particular surface to be cleaned, with consequent often relevant disadvantages.

A first disadvantage is that, using a mixing with a wrong strength or too diluted, an adequate cleaning is not performed. This is of particular relevance, especially in rooms where a thorough cleaning is to be performed, with a consequent necessity to pass several times with the wash-and-dry machine on the same floor, thus increasing operating costs and working time.

A further disadvantage is due to the fact that a mixing obtained according to incorrect percentages may cause irreparable damage to the surface on which it is applied. One would only have to think of a chemical product that is too concentrated or particularly acidic, which may cause an undesirable halo effect or even to corrode a surface on which it is applied and/or the mechanical parts that it may come in contact with.

A further disadvantage is due to an excessive use of deterging products and water necessary for their dilution during manual mixing before use, which translates into rise of global costs and after cleaning residual polluting substances.

The object of the present invention, as defined in general terms in claim 1, is therefore to provide a liquid chemical products mixing device which overcomes this and other inconveniencies of prior art.

In particular, an object of the present invention is to provide a mixing device able to warrant an absolute consistency to the strength of the mixture, consequently lending higher quality cleaning operations, as the concentration is always the one recommended by the manufacturer of the concentrated detergent, thus optimizing the consumption of the non diluted product and limiting as much as possible waste pollutant residues.

Another object of the present invention is to provide a mixing device which allows to obtain superior chemical-physical characteristics and homogeneousness of the obtained mixture, as the mixing operation is performed in hydrodynamic turbulence condition.

A further object of the present invention is to warrant a higher degree of safety for operators in presence of corrosive or fume generating products, since thanks to the mixing device of the present invention, any contact is eliminated with the non diluted product which, if used incorrectly, is often the cause of skin or respiratory irritations.

Last but not least, the object of the present invention is to provide a mixing device for machines which is compact, versatile and easy to use, fit to be connected thereto, even and especially in a removable way, both in the manufacturing stage and as retrofit.

The present invention will now be illustrated in detail with reference to two particular embodiments, here included only as non limitative examples, and annexed drawings. In the first example the device is illustrated as a generic liquid mixing stand alone, in the second example it is connected to a self-propelled machine.

Both applications use the same basic principle and differ uniquely in the hydraulic couplings and voltage input, being the supply mains in the stand alone version, and the supply of the host machine in the second example.

Inside the device 15 a precision motor pump 21 is therefore provided, able to draw in and charge liquids in said device and to deliver the resulting mixture inside the main tank 7, said motor pump 21 being managed by a microprocessor control unit 23. The strength of the mixture and the calculations of the necessary quantity of said mixture to be injected inside the main tank 7 are performed by the control unit 23, through real time measurement of the quantity of water and of non diluted product through respective entry fillers 17 and 19, said control unit also managing the operation of the motor pump 21 for the injection of said mixture.

The operator's management of the mixing device 15 is achieved through a control panel 27 installed on said mixing device 15. By means of the control panel 27 it is also possible the precise regulation of the strength of the mixture obtainable, for example between 0,1% and 20% according to most common applications. In alternative, the control panel, as also the control unit itself, could be installed in a different position, for example on the main control board of the machine 1 for an easier use.

The presence of components manufactured according to the most recent safety standards, free from the necessity for specific periodic maintenance and able to resist and therefore mix most of the currently available commercial products, both acidic and alkaline, and the possibility to arrange the mixing device, through a sealing adaptor, on a plurality of different machines, both in manufacturing stage and in retrofitting, both underline the safety and versatility attributes of the device.

In any case it is to be noted that several variations, modifications, additions and/or substitutions of equivalent elements could possibly be carried out to the mixing device just by way of example described, without falling out of the scope of the present invention, as defined by the annexed claims.
Fig. 1 is a diagrammatic lateral view of a self propelled wash-and-dry machine, provided with the mixing device according to the invention
Fig. 2 is a diagrammatic view of the mixing machine according to the invention, showing its basic components

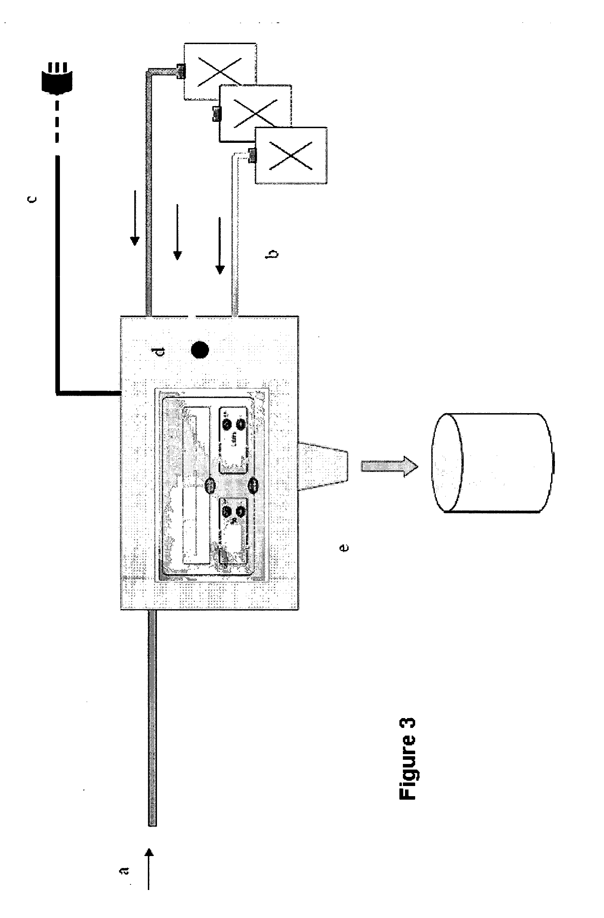

Fig. 3 is the generic device hanged on a wall and positioned as to be able to provide the mix of water and detergent directly in bottles or buckets. In detail:
   - a) a water feeding pipe
   - b) the mixing liquid feeding pipes
   - c) the electric cable suitably sectioned by a switch d)
   - e) the delivery nozzle

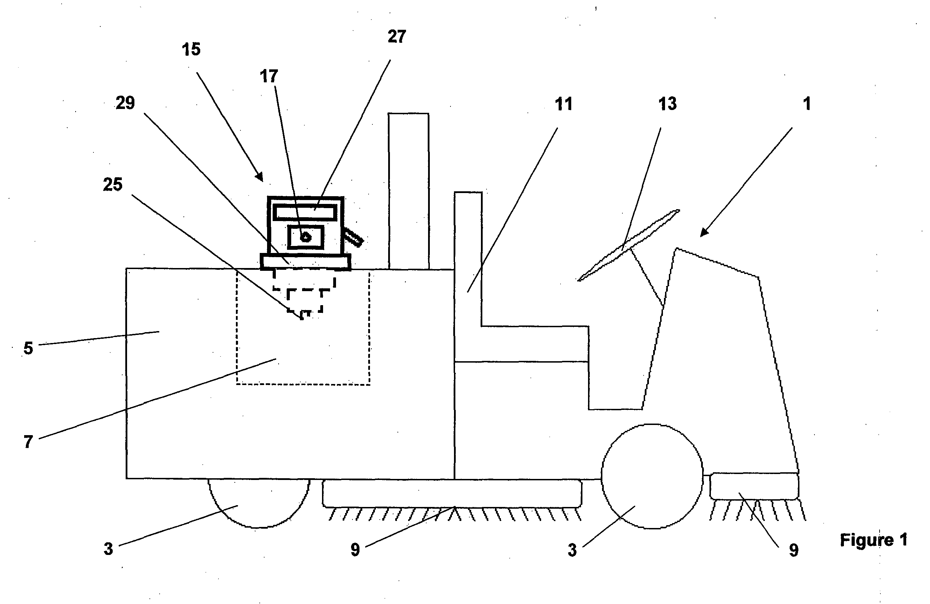

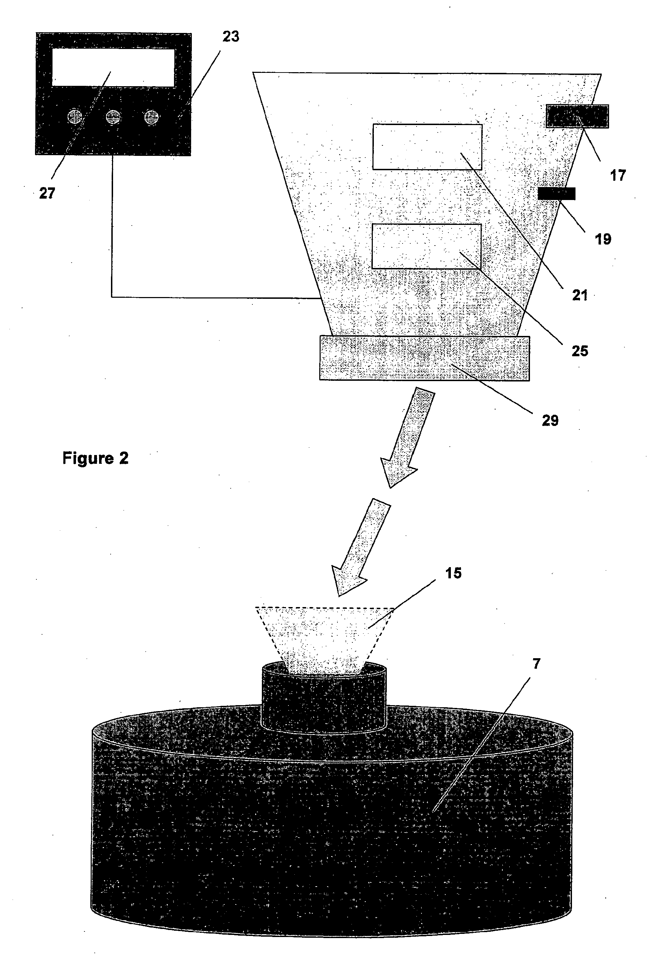

With reference to Fig. 1 of annexed drawings, it is here schematically illustrated a generic self propelled wash-and-dry machine 1. The machine 1 is usually supported on the surface to be cleaned by a variable number of wheels 3 and it is provided with a main body 5 which usually contains the basic machine gears, among which the main tank 7 for the liquid or the deterging mixture (Figure 2). Thr schematic arrangement of the machine 1 is completed by one or more rotatary brushes 9, a plurality of nozzles (not shown) for the emission of the deterging mixture which can be integrated in said brushes 9, and fixtures for a driver, generically indicated by a seat 11 and a driving wheel 13. Other conventional controls are also provided but not shown.

The mixing device object of this invention is assembled on the main body 5 of machine 1, preferably but not necessarily in on the detergent liquid tank 7, it is generally indicated with reference number 15 in the annexed figures.

According to an embodiment of this invention, device 15 is provided with two inlet fillers for the basic liquids to be mixed. More specifically, there have been provided at least one water inlet filler 17 and at least one inlet nozzle 19, for the basic chemical product is to be mixed with said water, both liquids can come from either their corresponding separated tanks, when provided, which are assembled inside the main body 5 of machine 1 and serving the purpose of refilling main tank 7, apt to contain the deterging mixture, or possibly from suitable tanks (not shown) associated to said device 15.

To guarantee maximum safety and ease of use, the mixing device 15 for machines according to the invention is also provided with a sensor 25 for the maximum filling level in main tank 7 of machine 1. Said sensor 25 is submerged in tank 7 and, through signals sent to control unit 23, it controls a solenoid valve (not shown) able to stop the inlet of water in water inlet filler 17.

For a reliable and safe connection of the mixing device 15 for machines according to the invention to the main tank 7 of machine 1, said device 15 is provided with a suitable sealing adaptor 29, able to be substituted for the inlet cap of a wide range of self-propelled wash-and-dry machines. Anyway, it is possible, according to particular types of machines and technical and planning needs, to place the device 15 in different positions on the machine, however without falling out of the scope of the present invention. The connection with main tank 7 of machine 1 for the supply of the mixed fluid will be made with any suitable available system.

As for electric power supply to the device 15, it is low voltage and it is supplied directly by the electric circuitry of machine 1, in such a way to guarantee an operative status for device 15 for the whole duration of its use.

Thus, the liquid chemical products mixing device for self-propelled machines according to the present invention, by means of periodic injection, controlled by the control unit 23, of concentrated product for mixing with water and sending of the resulting mixture to the detergent tank of the machine, achieves the intended objects, allowing to produce, in a completely automatic way and with continuity, a mixture with predetermined strength, said strength having the possibility to be adjustable according to needs by means of a suitable control panel. This enables to have constantly at hand, on the machine, the deterging mixture with the right features for a thorough cleaning of any kind of surface, without the danger of causing damage to the surface or harm to the operator, since the refilling of the chemicals is performed only from time to time or possibly committed to qualified personnel.

## Claims

1. A liquid chemical products mixing device (15), suitable to be installed on a generic self-propelled wash-and-dry machine (1) connected to main tank (7) for liquid or deterging mixture of said machine (1), **characterized by**:
• at least one water inlet filler (17) and at least one chemical inlet filler (19), said chemical to be mixed with said water, both inlets belonging to said device (15)
• at least one microprocessor control unit (23) suitable to control the strength of the mixture of said water and said chemical product and to calculate the amount of said mixture to be injected in said main tank (7) by means of real time measuring of the amount of water and chemical product drawn by respective inlet fillers (17 and 19); and
• at least one motor pump (21), managed by said control unit (23), suitable to draw water and said chemical product at the inlet of said device (15) and to deliver the resulting mixture inside said main tank (7)

2. The device (15) according to claim 1, **characterized by** including at least one sensor (25) submerged in said main tank (7) for surveying the maximum filling level in main tank (7) of machine (1).

3. The device (15) according to claim 2 **characterized in that** said sensor/s (25) by means of signals sent to said control unit (23), manage(s) a solenoid valve suitable to stop water inlet from said filler (17)

4. The device (15) according to claim 1, **characterized by** including at least a sealing adaptor (29), able to replace the inlet cap of said main tank 7, for a reliable and safe connection of said device (15) to said main tank (7) of said machine (1).

5. The device (15) according to claim 1, **characterized in that** said control unit (23) can be suitably programmed by the user by means of a control panel (27) accessibly positioned on said device (15) or on the main control panel of said machine (1).

6. The device (15) according to claim 1, **characterized in that** said water and said chemical product entering said device (15) originate from respective separate tanks assembled inside the main body (5) of said machine (1) and serving for refilling said main tank (7) apt to contain the deterging mixture.

7. The device (15) according to claim 1, **characterized in that** said water and said chemical product entering said device (15) come from suitable tanks associated to said device (15).

8. The device (15) according to claim 1, **characterized by** low voltage power supply directly from the electric circuitry of said machine (1), in such a way as to provide an operative status for said machine during its use.
